(19) Europäisches Patentamt
European Patent Office
Office européen des brevets

(11) **EP 4 354 928 A1**

(12) **EUROPEAN PATENT APPLICATION**

(43) Date of publication:
**17.04.2024 Bulletin 2024/16**

(21) Application number: **22201746.9**

(22) Date of filing: **14.10.2022**

(51) International Patent Classification (IPC):
**H04W 12/122** (2021.01)   **H04W 12/61** (2021.01)
**G01S 13/78** (2006.01)   **G01S 7/00** (2006.01)

(52) Cooperative Patent Classification (CPC):
**G01S 13/878; G01S 7/006; G01S 13/765;**
**H04W 12/104; H04W 12/122;** H04L 63/1425;
H04L 63/1466; H04W 12/61; H04W 12/63

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NXP B.V.**
**5656 AG Eindhoven (NL)**

(72) Inventors:
• **GUSTIN, Matjaz**
**5656 AG Eindhoven (NL)**

• **CASAMASSIMA, Filippo**
**5656 AG Eindhoven (NL)**

(74) Representative: **Krott, Michel**
**NXP Semiconductors**
**Intellectual Property Group**
**High Tech Campus 60**
**5656 AG  Eindhoven (NL)**

Remarks:
Amended claims in accordance with Rule 137(2)
EPC.

(54) **DETECTING ATTACKS ON DISTANCE ESTIMATIONS BETWEEN ULTRA-WIDEBAND NODES**

(57)    In accordance with a first aspect of the present disclosure, an attack detection method is conceived, comprising: performing ranging operations between at least two ultra-wideband (UWB) nodes comprised in a communication network, wherein said ranging operations output ranging results; performing at least one consistency check on the ranging results output by the ranging operations; detecting at least one attack on an estimated distance between one or more of said UWB nodes using an output of the consistency check. In accordance with further aspects of the present disclosure, a corresponding attack detection system is provided, as well as a computer program for carrying out the attack detection method.

Fig. 3

## Description

TECHNICAL FIELD

The present disclosure relates to an attack detection method. Furthermore, the present disclosure relates to a corresponding attack detection system, and to a method for carrying out the attack detection method.

BACKGROUND

Ultra-wideband (UWB) communication technology is a technology that uses a high signal bandwidth, in particular for transmitting digital data over a wide spectrum of frequency bands with very low power. For example, UWB technology may use the frequency spectrum of 3.1 to 10.6 GHz and may feature a high-frequency bandwidth of more than 500 MHz and very short pulse signals, potentially capable of supporting high data rates. The UWB technology enables a high data throughput for communication devices and a high precision for the localization of devices. In particular, UWB technology may be used for so-called ranging operations, i.e. for determining the distance between communicating devices. Therefore, UWB technology may be used to advantage in various applications, such as automotive applications.

SUMMARY

In accordance with a first aspect of the present disclosure, an attack detection method is conceived, comprising: performing ranging operations between at least two UWB nodes comprised in a communication network, wherein said ranging operations output ranging results; performing at least one consistency check on the ranging results output by the ranging operations; detecting at least one attack on an estimated distance between one or more of said UWB nodes using an output of the consistency check.

In one or more embodiments, the consistency check comprises: performing, between UWB nodes located at a predefined, fixed distance of each other, single-sided two-way ranging operations while said UWB nodes are performing one or more further ranging operations with a mobile UWB node; comparing an output of the single-sided two-way ranging operations with said predefined, fixed distance; concluding that an inconsistency exists if the output of the single-sided two-way ranging operations does not correspond to the predefined, fixed distance.

In one or more embodiments, the method further comprises concluding that an attack is carried out on an estimated distance between said UWB nodes and the mobile UWB node if said inconsistency exists, wherein the further UWB node mobile UWB node has a variable distance to each of the UWB nodes located at the predefined, fixed distance of each other.

In one or more embodiments, the UWB nodes located at the predefined, fixed distance of each other act as responder nodes and the mobile UWB node acts as an initiator node; or one of the UWB nodes located at the predefined, fixed distance of each other acts as an initiator node, the other UWB nodes located at the predefined, fixed distance of each other act as responder nodes, and the mobile UWB node acts as a responder node.

In one or more embodiments, it is concluded that the inconsistency exists after a predefined margin of tolerance has been taken into account.

In one or more embodiments, the consistency check comprises: performing, by a first UWB node, a first single-sided two-way ranging operation with a second UWB node; performing, by the second UWB node, a second single-sided two-way ranging operation with the first UWB node; performing, by the first UWB node and the second UWB node, a double-sided two-way ranging operation; concluding that an inconsistency exists if an output of the first single-sided two-way ranging operation does not correspond to an output of the second single-sided two-way ranging operation, the output of the first single-sided two-way ranging operation does not correspond to an output of the double-sided two-way ranging operation, and/or the output of the second single-sided two-way ranging operation does not correspond to the output of the double-sided two-way ranging operation.

In one or more embodiments, the method further comprises concluding that an attack is carried out on an estimated distance between the first UWB node and the second UWB node if said inconsistency exists.

In one or more embodiments, one of the first UWB node and the second UWB node acts as an initiator node, and the other one of the first UWB node and the second UWB node acts as a responder node.

In one or more embodiments, it is concluded that the inconsistency exists after a predefined margin of tolerance has been taken into account.

In one or more embodiments, the consistency check comprises: performing, by a first UWB node, at least one first single-sided two-way ranging operation with a second UWB node; performing, by the first UWB node, at least one second single-sided two-way ranging operation with the second UWB node; performing, by the first UWB node, a first double-sided two-way ranging operation; performing, by the second UWB node, a second double-sided two-way ranging operation; concluding that an inconsistency exists if an output of the first double-sided two-way ranging operation does not correspond to an output of the second double-sided two-way ranging operation, and/or an output of the first single-sided two-way ranging operation does not correspond to an output of the second single-sided two-way ranging operation.

In one or more embodiments, the method further comprises concluding that an inconsistency exists if: the output of the first double-sided two-way ranging operation does not correspond to the output of the first single-sided two-way ranging operation; the output of the first double-sided two-way ranging operation does not correspond to the output of the second single-sided two-way ranging operation; the output of the second double-sided two-way ranging operation does not correspond to the output of the first single-sided two-way ranging operation; and/or the output of the second double-sided two-way ranging operation does not correspond to the output of the second single-sided two-way ranging operation.

In one or more embodiments, one of the first UWB node and the second UWB node acts as an initiator node, and the other one of the first UWB node and the second UWB node acts as a responder node.

In one or more embodiments, it is concluded that the inconsistency exists after a predefined margin of tolerance has been taken into account.

In accordance with a second aspect of the present disclosure, an attack detection system is provided, comprising: at least two UWB nodes comprised in a communication network, wherein said UWB nodes are configured to perform ranging operations, and wherein said ranging operations output ranging results; an attack detection unit configured to perform at least one consistency check on the ranging results output by the ranging operations; wherein the attack detection unit is further configured to detect at least one attack on an estimated distance between one or more of said UWB nodes using an output of the consistency check.

In accordance with a third aspect of the present disclosure, a computer program is provided, comprising executable instructions which, when executed by an attack detection system of the kind set forth, carry out a method of the kind set forth.

DESCRIPTION OF DRAWINGS

Embodiments will be described in more detail with reference to the appended drawings.

Fig. 1 shows an illustrative embodiment of an attack detection method.

Fig. 2 shows an illustrative embodiment of an attack detection system.

Fig. 3 shows an illustrative embodiment of a multi-responder setup in which all responders are anchors, i.e. fixed-position devices.

Fig. 4 shows the same setup as in Fig. 3, highlighting a single-sided result of two responders.

Fig. 5 shows the same setup as in Fig. 3, highlighting a single-sided result of two responders.

Fig. 6 shows the same setup as in Fig. 3, highlighting a single-sided result of two responders.

Fig. 7 shows the same setup as in Fig. 3 with a distance-shortening attack occurring on a message from a given responder.

Fig. 8 shows an illustrative embodiment of a multi-responder setup, in which one of the anchors, i.e. a fixed-position device, acts as an initiator and a tag, i.e. a moving device, as responder.

Fig. 9 shows an illustrative embodiment of a single initiator and responder setup performing a DS-TWR.

Fig. 10 shows another illustrative embodiment of a single initiator and responder setup performing a generalized DS-TWR.

Fig. 11 shows a table illustrating a detection performance for a DS-TWR.

Fig. 12 shows another table illustrating a detection performance for a generalized 4-message DS-TWR.

DESCRIPTION OF EMBODIMENTS

UWB technology - also referred to as impulse-radio ultra-wideband (IR-UWB) - is an RF communication technology that uses pulses having a short duration for data communication. An important feature of IR-UWB technology is that it can be used for secure and accurate distance measurements between two or more devices. Typical distance measurement methods are the so-called single-sided two-way ranging (SS-TWR) method and the double-sided two-way ranging (DS-TWR) method. It is noted that real-time localization systems include so-called "anchors" which are placed at fixed positions in a given environment (e.g., a car, a building or a room) and mobile nodes which are often referred to as "tags". Using radio technology a tag can determine its position relative to the available anchors.

Because UWB technology has an accurate distance measurement capability, it may be used to advantage in access systems in which the position of devices should be determined to enable access to an object. For instance, a vehicle access system may comprise a user's smart device (e.g., key fob) and another smart device (e.g., an anchor embedded in the vehicle). To enable access to the vehicle, the user's smart device must have a predefined range relative to the other smart device. Therefore, UWB transceivers are typically configured to operate in a ranging mode. In another example, UWB technology may be used for accessing a building or a predefined space within a building.

In the ranging mode of operation, UWB messages will typically be exchanged between two devices via at least one antenna on each device, and at least a SS-TWR operation will be carried out (which may also be referred to as a ping-pong operation). In particular, channel impulse responses (CIRs) are estimated on both devices, timestamps will be generated based on the CIRs on both devices, and those timestamps are exchanged. Alternatively, a DS-TWR operation may be carried out (which may also be referred to as a ping-pong-ping operation). More specifically, an SS-TWR operation involves the measurement of a round-trip delay of a first message (called Poll) sent from an initiator device to a responder and of a second message (called Response) sent back from the responder to the initiator. By recording the timestamps of all transmissions and receptions, the initiator (and only the initiator) is able to compute the time of flight (ToF) of the messages over the air and from the ToF and the speed of light the distance (which may also be referred to as "range") between the devices can be calculated. A DS-TWR operation is an extension of an SS-TWR operation, in which a third message (called Final) is added at the end from the initiator back to the responder. This has an increased accuracy over the SS-TWR operation, as it corrects any clock frequency offsets occurring between the two devices. It is noted that a DSTWR can be seen as containing two SS-TWR operations squashed together. Furthermore, it is noted that the SS-TWR and DS-TWR operations are defined in the following technical standards: 802.15.4-2020 - *IEEE Standard for Low-Rate Wireless Networks* (Revision of IEEE Std 802.15.4-2015), 23 July 2020, doi: 10.1109/IEEESTD.2020.9144691, and 802.15.4z-2020 - *IEEE Standard for Low-Rate Wireless Networks-- Amendment 1: Enhanced Ultra Wideband (UWB) Physical Layers (PHYs) and Associated Ranging Techniques* (Amendment to IEEE Std 802.15.4-2020), 25 Aug. 2020, doi: 10.1109/IEEESTD.2020.9179124.

In practice, localization systems may be susceptible to various types of attacks. For example, attacks on UWB systems that trigger a too-early first path detection in the receiver devices induce the ranging devices to produce a shorter-than-real distance between them. Such attacks may be the Cicada attacks or scrambled timestamp sequence (STS) attacks. All the UWB attacks for distance reduction involve the preamble section of the message. Cicada attacks for instance act on the Ipatov preamble injecting periodic pulses than then aggregate on the receiver. STS attacks can work in different ways: the easiest attack is based on transmission of random STSs with higher power at exactly the correct time, which results in a higher probability that the incorrect STS is accepted and the distance estimation is tampered with. Furthermore, the possibility of tampering with distance estimations prevents the detection of wormhole attacks on a wireless sensor network. In such attacks, a malicious node can pretend to have better communication channels and steal packets from the network. However, if the distance estimation cannot be tampered with (e.g., using secure ranging) such attacks can be detected. Therefore, it is desirable to detect attacks on distance estimations of the kind set forth.

Now discussed are an attack detection method and a corresponding attack detection system, which facilitate the detection of attacks on distance estimations in UWB-based communication networks, in particular in UWB-based localization systems of the kind set forth above. It is noted that the term "attack" may be interpreted in a broad sense. For instance, the term may generally refer to any attempt to retrieve or inject information in an unauthorized manner, and more specifically to the types of attacks described above.

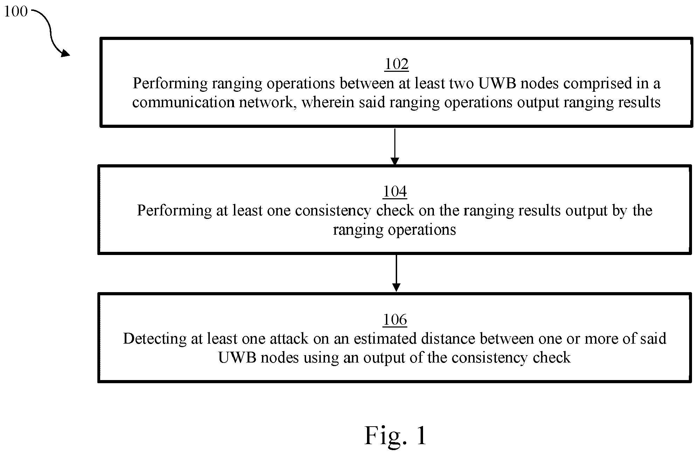

**Fig. 1** shows an illustrative embodiment of an attack detection method 100. The method 100 comprises the following steps. At 102, ranging operations are performed between at least two UWB nodes comprised in a communication network, wherein said ranging operations output ranging results. Furthermore, at 104, at least one consistency check is performed on the ranging results output by the ranging operations. Furthermore, at 106, at least one attack is detected on an estimated distance between one or more of said UWB nodes using an output of the consistency check. By performing a consistency check on ranging results output by ranging operations between UWB nodes, and using an output of the consistency check to detect an attack, the attack may be detected more easily.

In one or more embodiments, the consistency check comprises: performing, between UWB nodes located at a predefined, fixed distance of each other, single-sided two-way ranging operations while said UWB nodes are performing one or more further ranging operations with a mobile UWB node; comparing an output of the single-sided two-way ranging operations with said predefined, fixed distance; concluding that an inconsistency exists if the output of the single-sided two-way ranging operations does not correspond to the predefined, fixed distance. By comparing the output of single-sided two-way ranging operations with a known distance, for example between anchors having a fixed location (and thus a fixed distance between them), an inconsistency, which may be caused by an attack, may be detected more easily. In one or more embodiments, the method further comprises concluding that an attack is carried out on an estimated distance between said UWB nodes and the mobile UWB node if said inconsistency exists, wherein the mobile UWB node has a variable distance to each of the UWB nodes located at the predefined, fixed distance of each other. In particular, an inconsistency arising between the output of single-sided two-way ranging operations and a fixed distance between immovable nodes may be indicative of an attack on an estimated distance between said immovable nodes and a moving node whose location should be determined. Therefore, the aforementioned inconsistency may be effectively be used to facilitate the detection of such an attack.

In a practical implementation, the UWB nodes located at the predefined, fixed distance of each other act as responder nodes and the mobile UWB node acts as an initiator node, or one of the UWB nodes located at the predefined, fixed distance of each other acts as an initiator node, the other UWB nodes located at the predefined, fixed distance of each other act as responder nodes, and the mobile UWB node acts as a responder node. Furthermore, in a practical implementation, it is concluded that the inconsistency exists after a predefined margin of tolerance has been taken into account. In other words, even if no exact match or correspondence exists between the output of the single-sided two-ranging operations and the fixed distance, they may still be regarded as corresponding if the difference between them is below a predefined threshold (i.e., tolerance level). Depending on the system setup, an increase in the measured distance between anchors may be a normal occurrence and thus could be ignored, if the setup is such that it allows obstructions to happen between pairs of anchors (such as a human walking by). The distance measurement would thus occur via a non-line-of-sight measurement, which will be longer than the fixed, known line-of-sight distance. On the other hand, a reduction of the measured distance between two fixed devices is always an unexpected event in a well-calibrated system, as it would indicate that light travelled faster than possible, and is thus an attack indicator.

In one or more embodiments, the consistency check comprises: performing, by a first UWB node, a first single-sided two-way ranging operation with a second UWB node; performing, by the second UWB node, a second single-sided two-way ranging operation with the first UWB node; performing, by the first UWB node and the second UWB node, a double-sided two-way ranging operation; concluding that an inconsistency exists if an output of the first single-sided two-way ranging operation does not correspond to an output of the second single-sided two-way ranging operation, the output of the first single-sided two-way ranging operation does not correspond to an output of the double-sided two-way ranging operation, and/or the output of the second single-sided two-way ranging operation does not correspond to the output of the double-sided two-way ranging operation. In particular, an inconsistency arising between the output of the first single-sided two-way ranging operation and the output of the second single-sided two-way ranging operation, between the output of the first single-sided two-way ranging operation and the output of the double-sided two-way ranging operation, and/or between the output of the second single-sided two-way ranging operation and the output of the double-sided two-way ranging operation, may be indicative of an attack on an estimated distance between the first UWB node and the second UWB node. Therefore, the aforementioned inconsistency may be effectively be used to facilitate the detection of such an attack. Accordingly, the method may further comprise concluding that an attack is carried out on an estimated distance between the first UWB node and the second UWB node if said inconsistency exists.

In a practical implementation, one of the first UWB node and the second UWB node acts as an initiator node, and the other one of the first UWB node and the second UWB node acts as a responder node. Furthermore, in a practical implementation, it is concluded that the inconsistency exists after a predefined margin of tolerance has been taken into account. In other words, even if no exact match or correspondence exists between the outputs of the different operations, they may still be regarded as corresponding if the difference between them is below a predefined threshold (i.e., tolerance level).

In one or more embodiments, the consistency check comprises: performing, by a first UWB node, at least one first single-sided two-way ranging operation with a second UWB node; performing, by the first UWB node, at least one second single-sided two-way ranging operation with the second UWB node; performing, by the first UWB node, a first double-sided two-way ranging operation; performing, by the second UWB node, a second double-sided two-way ranging operation; concluding that an inconsistency exists if an output of the first double-sided two-way ranging operation does not correspond to an output of the second double-sided two-way ranging operation, and/or an output of the first single-sided two-way ranging operation does not correspond to an output of the second single-sided two-way ranging operation. In particular, an inconsistency arising between the outputs of these different operations may be indicative of an attack on an estimated distance between the first UWB node and the second UWB node. Furthermore, in one or more embodiments, the method further comprises concluding that an inconsistency exists if: the output of the first double-sided two-way ranging operation does not correspond to the output of the first single-sided two-way ranging operation; the output of the first double-sided two-way ranging operation does not correspond to the output of the second single-sided two-way ranging operation; the output of the second double-sided two-way ranging operation does not correspond to the output of the first single-sided two-way ranging operation; and/or the output of the second double-sided two-way ranging operation does not correspond to the output of the second single-sided two-way ranging operation. In particular, an inconsistency arising between the outputs of these different operations may also be indicative of an attack on an estimated distance between the first UWB node and the second UWB node.

In a practical implementation, one of the first UWB node and the second UWB node acts as an initiator node, and the other one of the first UWB node and the second UWB node acts as a responder node. Furthermore, in a practical implementation, it is concluded that the inconsistency exists after a predefined margin of tolerance has been taken into account. In other words, even if no exact match or correspondence exists between the outputs of the different operations, they may still be regarded as corresponding if the difference between them is below a predefined threshold (i.e., tolerance level).

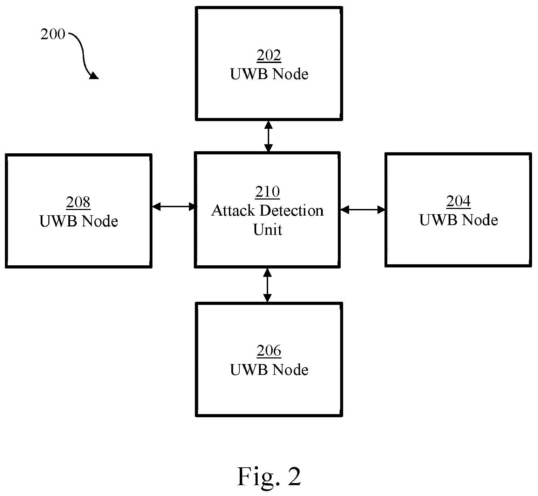

Fig. 2 shows an illustrative embodiment of an attack detection system 200. The system 200 comprises a plurality of UWB nodes 202, 204, 206, 208 and an attack detection unit 210. It is noted that, although the attack detection unit 210 has been drawn as a separate unit, it may also be integrated into one of the UWB nodes 202, 204, 206, 208, or distributed over several of said nodes. Furthermore, at least a part of said attack detection unit 210 may be integrated into a localization unit (not shown), which collects and processes data received from the UWB nodes 202, 204, 206, 208. Thus, the attack detection unit 210 is a functional unit that can be integrated into, or distributed over, different physical components of a localization system. The UWB nodes 202, 204, 206, 208 are configured to perform ranging operations, wherein said ranging operations output ranging results. Furthermore, the attack detection unit 210 is configured to perform at least one consistency check on the ranging results output by the ranging operations. In addition, the attack detection unit 210 is configured to detect at least one attack on an estimated distance between one or more of said UWB nodes 202, 204, 206, 208 using an output of the consistency check. As mentioned above, by performing a consistency check on ranging results output by ranging operations between UWB nodes, and using an output of the consistency check to detect an attack, the attack may be detected more easily.

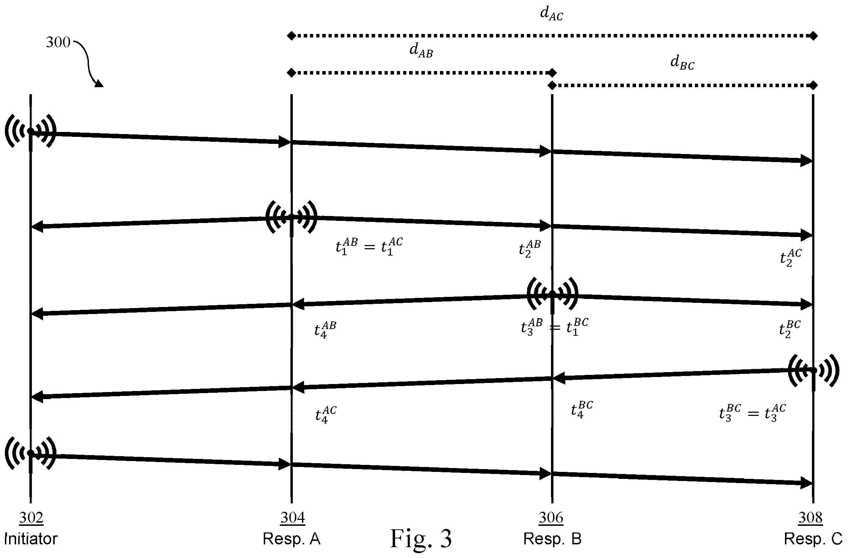

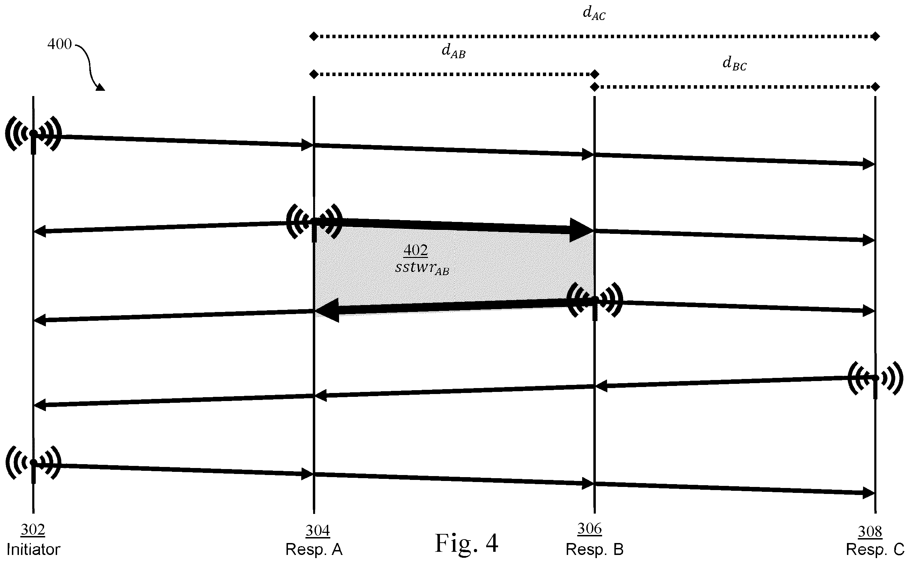

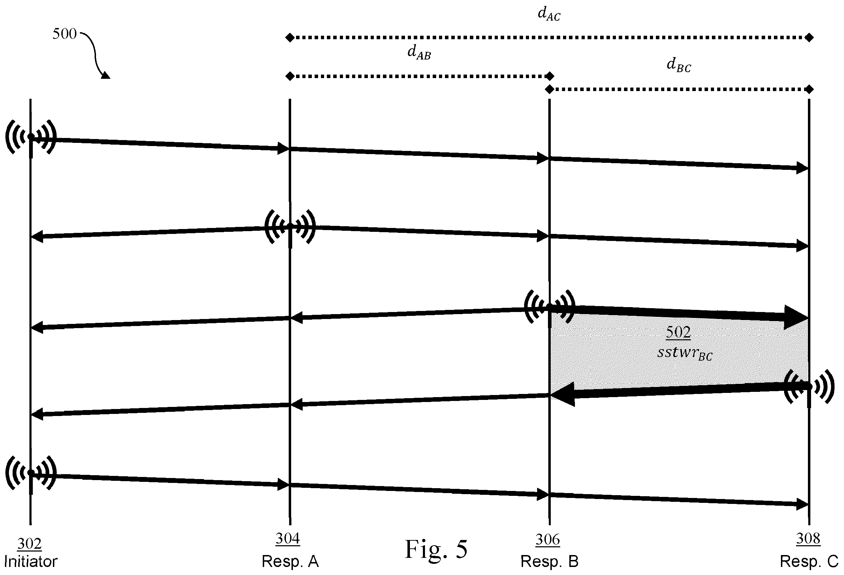

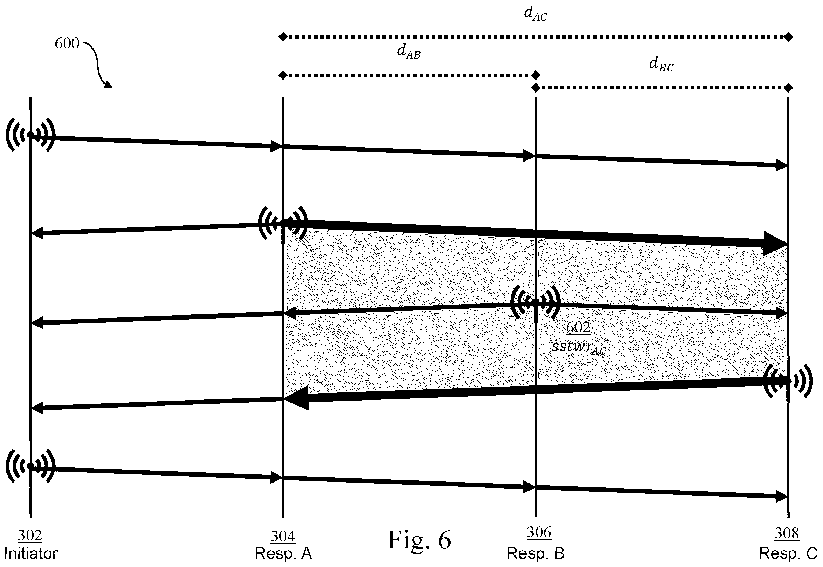

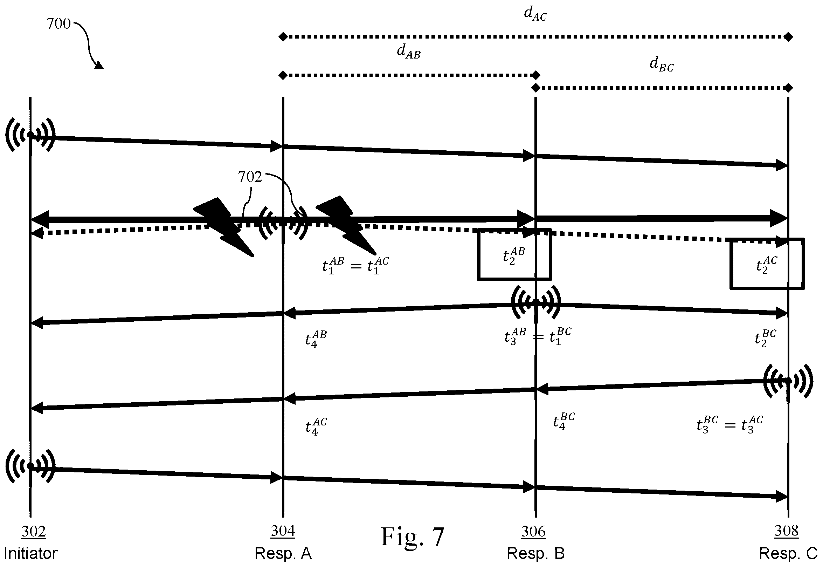

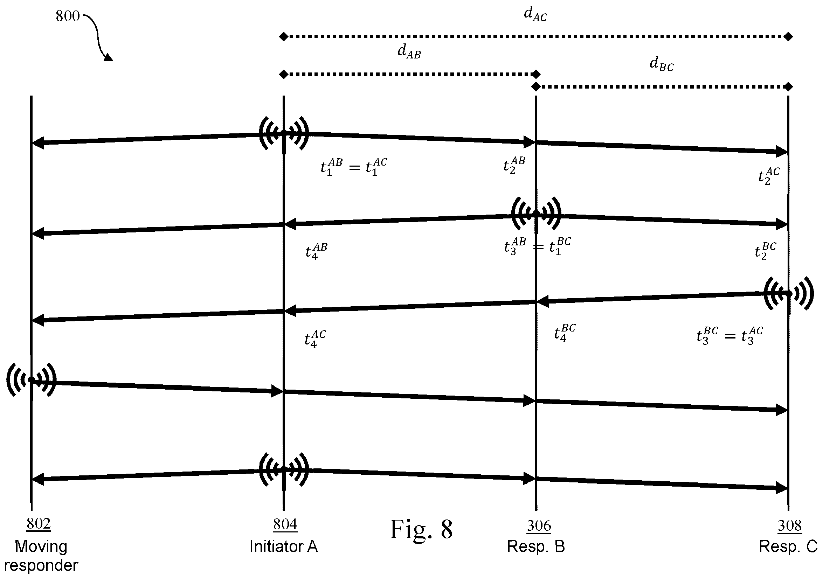

**Figs. 3 to 8** show illustrative embodiments of a multi-responder setup 300, 400, 500, 600, 700, 800. In particular, a typical multi-responder setup is shown, using broadcasted initiator messages and DS-TWR between each initiator-responder pair. It is noted that $d_{AB}$, $d_{AC}$, $d_{BC}$ are known, fixed distances between fixed-position responders (i.e., anchors), $t_i^{AB}$ are the timestamps occurring between responders A and B, and the antenna icon indicates a transmitting device. Furthermore, several single-sided two-way ranging operations between responders that output ranging results 402, 502, 602 are shown, indicated as $sstwr_{AB}$, where A and B are the responders. In Fig. 7, an attack signal 702 is shown. It is noted that the timestamps modified by the attack are shown with boxes around them. In particular, an attacker anticipates the signal path coming from responder A 304. The timestamps $t_2^{AB}, t_2^{AC}$ (boxed) thus indicate an earlier point in time and the measured SS-TWR distances (or at least one from them) between the responders $sstwr_{AB}$ and $sstwr_{AC}$ are now shorter than the known-true fixed values $d_{AB}$, $d_{AC}$. Fig. 8 shows that the setup is also possible when one of the fixed devices (anchors) acts as initiator and the moving device (tag) acts as a responder. In that case, each fixed-device pair (A,B), (A,C), (B,C) can still measure a SS-TWR.

In accordance with the present disclosure, a consistency check may be performed on ranging results output by the ranging operations, which are carried out between the UWB nodes 302, 304, 306, 308, 802, 804, in order to facilitate detecting an attack of the kind shown in Fig. 7. To this end, a fixed inter-responder distance may be validated according to a first algorithm. This algorithm may be executed under the following assumptions: one initiator ranging device communicates with many fixed responder devices having known positions (i.e., with a plurality of anchors). Consequently, the distances between the responders are known. Furthermore, it may be assumed that a broadcast-based ranging scheme is applied, for example a scheme as prescribed by the FiRa Consortium or by the Car Connectivity Consortium (CCC). According to this scheme, the initiator transmits a single UWB message for all responders to receive, and the responders then reply in different timeslots. Furthermore, the scheme may be SS-TWR or DS-TWR; according to the latter another broadcast message from the initiator appears. Furthermore, it may be assumed that all timestamps are collected in a central location. Finally, it should be assumed that at least a subset of the responders or all responders remain in receiving mode (RX on) during the timeslots of other responders, recording the timestamps of the UWB messages transmitted by other anchors; otherwise the inter-responder SS-TWR measurements cannot be performed.

According to the first algorithm, all pairs of fixed-position responders can perform a SS-TWR measurement $sstwr_{AB}$ between them to verify whether the distance between them is substantially altered compared to the known, fixed one $d_{AB}$. An alteration $sstwr_{AB} \neq d_{AB}$ indicates an attack trying to reduce the ranging distance between the initiator and one of the two responders of the pair. Each responder pair only needs to collect the four timestamps of when they transmitted the messages to the initiator (e.g., $t_1^{AB}$, $t_3^{AB}$ in Fig. 3, which are already collected in a typical broadcasted scheme) and of when they received the messages from the other responders (e.g., $t_2^{AB}$, $t_4^{AB}$ in Fig. 3). An SS-TWR operation performed between two responders would be shorter in case of an attack, because one of the two timestamps which indicate a message reception $t_2^{AB}$, $t_4^{AB}$ would (because of the attack) indicate a point in time prior to the true instant of reception of the authentic UWB message from the other party. The SSTWR ToF formula $\frac{(t_4^{AB} - t_1^{AB}) - (t_3^{AB} - t_2^{AB})}{2}$ produces a smaller result (thus shorter distance) in case $t_4^{AB}$ or $t_4^{AB}$ is smaller. Such an attack is presented in Fig. 7 where the attacker is able to reduce the timestamp $t_2^{AB}$.

It is noted that if the initiator receives the signal from only one responder, the entire setup may have to raise an error, as the other double-checking responders may have been shielded by the attacker. Furthermore, a tolerance level for the difference between expected and measured values may be applied according to the system requirements and properties: $|sstwr_{AB} - d_{AB}| < tolerance$. Furthermore, it is noted that the algorithm also works when one of the fixed devices (i.e., anchors) acts as an initiator instead of the tag taking that role, as is shown in Fig. 8. Furthermore, the algorithm is also applicable for downlink time difference of arrival (TDoA) schemes, as long as the assumption holds that the responders remain in receiving mode (RX on) during the timeslots of other responders: blinking anchors are able to measure the timestamps of when they receive each other's blink messages, which provides them with pair-wise SS-TWR results.

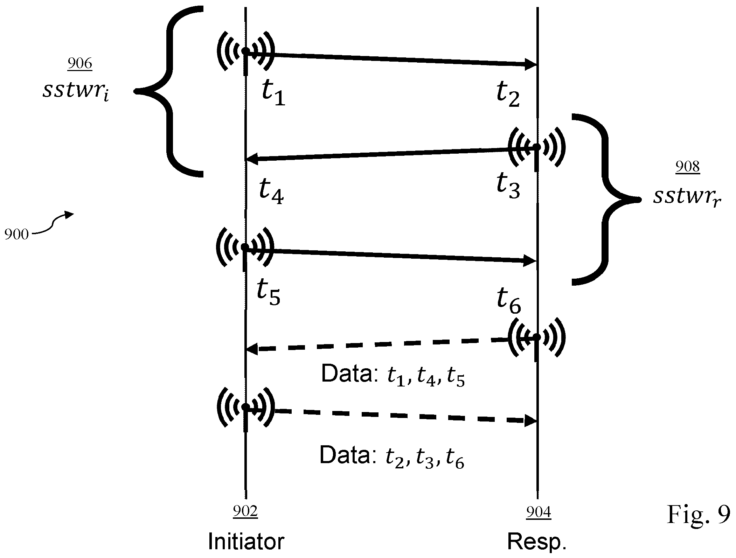

**Fig. 9** shows an illustrative embodiment of a single initiator and responder setup 900 performing a DS-TWR.. In particular, the setup 900 contains a single initiator 902 and a single responder 904 performing a DS-TWR. It is noted that the setup 900 may form a subset of a larger setup, containing more devices. According to the setup 900, each side (i.e., the initiator 902 as well as the responder 904) is able to compute a SS-TWR value 906, 908. Furthermore, they both exchange their timestamps to compute the SS-TWR results of each side and compare them with each other and to the DS-TWR result. The timestamp exchange may happen in-band (depicted with dashes) or out-of-band.

In accordance with the present disclosure, a consistency check may be performed on ranging results output by the ranging operations, which are carried out between the initiator 902 and the responder 904, in order to facilitate detecting an attack on an estimated distance between the initiator 902 and the responder 904. To this end, an initiator-responder pair compares SS-TWR values from a DS-TWR method according to a second algorithm. The second algorithm may be executed under the following assumptions. One initiator ranging device communicates with one responder device, but there is no requirement for any of the two devices to be in a fixed, known position; even both can be moving compared to the environment, provided that the movement is sufficiently slow. Since the second algorithm may be applied to every single initiator-responder pair of a multi-responder setup, it may be used simultaneously with the first algorithm. Furthermore, it may be assumed that the initiator and responder perform a DS-TWR time of flight measurement, and that all timestamps are collected in a central location. Finally, it may be assumed that at least one of the two devices is able to measure the clock drift between the two devices from the reception of a message from the other device (e.g., by analyzing UWB symbol timeslot alterations over time). This is may be needed to make the SS-TWR results comparable. If this is not possible, then the below-described third algorithm may be used instead.

According to the second algorithm, after performing a DS-TWR message exchange, both sides provide all their timestamps to each other. Both sides compute the DS-TWR result and both SS-TWR results $sstwr_i$, $sstwr_r$ 906, 908. Both sides compare all three ranging results with each other. An alteration:

- $sstwr_i \neq sstwr_r$
- and/or $sstwr_i \neq dstwr$

- and/or $sstwr_r \neq dstwr$

indicates an attack trying to reduce the ranging distance between the sides. In particular, when an attack is performed on the first (poll) message, then the following holds: $t_{2A} = t_2 - t_A \rightarrow sstwr_r$ not affected $\rightarrow sstwr_i \neq sstwr_r$. Furthermore, when an attack on the second (response) message is performed, then the following holds: $t_{4A} = t_4 - t_A$, both time estimations are affected, such that:

$$sstwr_i = \frac{(t_{4A}-t_1)-(t_3-t_2)}{2} \;;$$

and

$$sstwr_r = \frac{(t_6-t_3)-(t_5-t_{4A})}{2}.$$

Thus, in case of an attack on the response message the attacker time reduction contributes in the same way to both equations, and as a consequence $sstwr_i = sstwr_r$. Furthermore, when an attack is performed on the final message, then the following holds: $t_{6A} = t_6 - t_A \rightarrow sstwr_i$ not affected $\rightarrow sstwr_i \neq sstwr_r$.

It is noted that, when comparing ranging results, a tolerance level may be applied according to the system requirements and properties. Furthermore, it is noted that the second algorithm may be combined with the first algorithm, in the sense that each pair (initiator, i-th responder) may compare their results as per the second algorithm, while the pairs of responders perform the consistency check of the first algorithm.

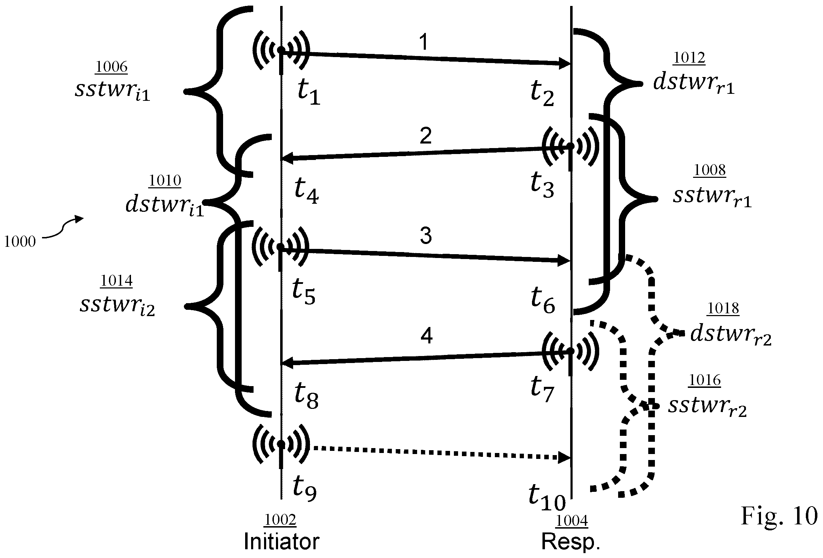

**Fig. 10** shows another illustrative embodiment of a single initiator and responder setup 1000 performing a generalized DS-TWR. In particular, the setup 1000 contains a single initiator 1002 and a single responder 1004 performing a generalized DS-TWR method with more than 3 messages exchanged. It is noted that the setup 1000 may form a subset of a larger setup, containing more devices. According to the setup 1000, each side (i.e., the initiator 1002 as well as the responder 1004) is able to compute at least one SS-TWR value and at least one DS-TWR value. Furthermore, the initiator 1002 and the responder 1004 exchange their timestamps to compare them. This timestamp exchange may be done in-band or out-of-band. While 4 messages ($t_1,..., t_8$) is the minimum to have one DS-TWR value from each side for the two sides to compare, a 5th, 6th etc. message may be added (which is depicted with dotted lines).

In accordance with the present disclosure, a consistency check may be performed on ranging results output by the ranging operations, which are carried out between the initiator 1002 and the responder 1004, in order to facilitate detecting an attack on an estimated distance between the initiator 1002 and the responder 1004. To this end, an initiator-responder pair compares all results from a generalized DS-TWR method according to a third algorithm. It is noted that the third algorithm may be regarded as a generalized version of the second algorithm. The third algorithm may be executed under the following assumptions. One initiator ranging device communicates with one responder device, but there is no requirement for any of the two parties to be in a fixed, known position; even both can be moving compared to the environment, provided that the movement is sufficiently slow. Since the third algorithm may be applied to every single initiator-responder pair of a multi-responder setup, it may be used simultaneously with the first algorithm. Furthermore, it may be assumed that the initiator and responder perform, in contrast to the second algorithm, a generalized DSTWR time of flight measurement with 4 or more messages to produce at least one DSTWR time of flight result on each side. In addition, at least one SS-TWR result on each side can be computed. Furthermore, it may be assumed that all timestamps are collected in a central location. Finally, again in contrast to the second algorithm, measuring the clock drift to compensate SS-TWR results is optional if only DS-TWR results are compared.

According to the third algorithm, after performing a generalized DS-TWR message exchange based on at least 4 messages, both sides provide all their timestamps to each other. Both sides compute one or more DS-TWR results and one or more SS-TWR results $sstwr_i$, $sstwr_r$. Both sides compare all three ranging results with each other. An alteration between the values indicates an attack trying to reduce the ranging distance between the sides:

- $dstwr_{i1} + dstwr_{r1}$ (comparable because clock-drift-independent)
- and/or $sstwr_{i1} + sstwr_{i2}$ (comparable because performed on the same side) If some clock-drift compensation for SS-TWR measurements is available, the consistency check may include the following additional checks:

  - and/or $sstwr_{i1} \neq dstwr_{i1}$
  - and/or $sstwr_{i2} \neq dstwr_{i1}$
  - and/or $sstwr_{r1} \neq dstwr_{r1}$
  - and/or $sstwr_{i1} \neq dstwr_{r1}$
  - and/or $sstwr_{i2} \neq dstwr_{r1}$
  - and/or $sstwr_{i1} \neq sstwr_{r1}$
  - and/or $sstwr_{i2} \neq sstwr_{r1}$
  - and/or $dstwr_{i1} \neq sstwr_{r1}$

The main advantage of this ranging scheme is the ability to obtain a DS-TWR result on each side, even in setups that are unable to measure the clock drifts between the two communicating devices, making the DS-TWR results comparable, which may not be true for SS-TWR results. If no clock drift compensation is available, the second algorithm may not perform well and the third algorithm may not be able to compare SS-TWR results, but it can at least compare the DS-TWR results.

It is noted that, when comparing ranging results, a tolerance level may be applied according to the system requirements and properties. Furthermore, it is noted that the third algorithm is a generalization of the second algorithm, in that it extends the DS-TWR method from 3 messages to 4 or more messages. It can be thus used as a dropin replacement of the second algorithm. Consequently, the third algorithm may be combined with the first algorithm 1, as the second algorithm can be combined with the first algorithm. Finally, it is noted that while 4 messages is the minimum requirement to achieve at least one DS-TWR result on each side, the scheme may be extended to 5, 6 or more messages, if needed, to increase the security level: it is more difficult to attack each single message if the number of messages is higher.

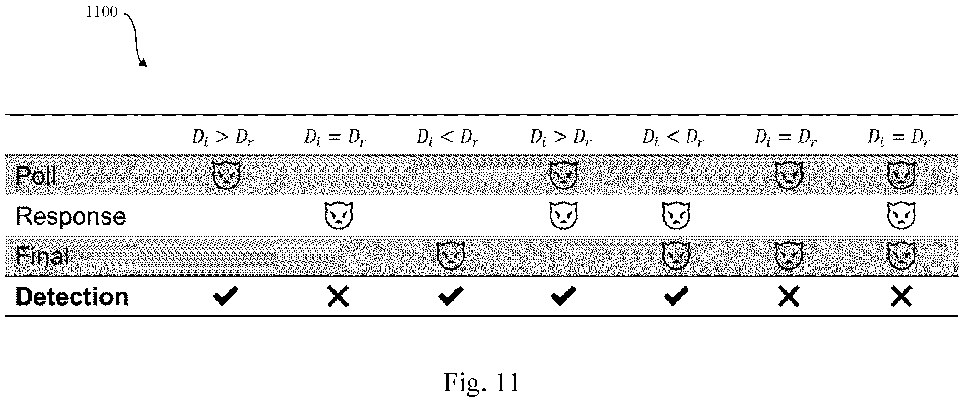

**Fig. 11** shows a table illustrating a detection performance 1100 for a DS-TWR. The table uses a simplified notation, according to which $sstwr_i$ is denoted as $D_i$ (where $D$ stands for distance) and $sstwr_r$ is denoted as $D_r$. An attacker, which is represented by the symbol 🐱, can anticipate one or more ranging messages, thus shorten the measured SS-TWR distance. In the table, the check mark symbol ✓ indicates when the attack can be detected using the second algorithm, and the cross symbol **X** indicates that the attack cannot be detected using the second algorithm. The above-given formulas explain why the first attack and the third attack are detected and the second attack is not detected. It is noted that the conclusions on the detection performance shown in the other columns can be easily verified using the same formulas.

Thus, the attacker can decide to tamper one or more of the 3 messages in a DSTWR exchange (Poll, Response, Final). In all cases but 3 a comparison between $sstwr_r$ and $sstwr_i$ distance estimation allows to detect the presence of an attack. In the other 3 possible cases the attack can be successful, but there are few points to consider. First, in case of an attack on the response message, the attacker should be close enough to the initiator device and this is not always possible (typically the initiator is a mobile phone). Second, in case of an attack on the poll and final message and all messages: for this attack to be successful the attacker must be able to induce the same distance reduction on all messages. However, since a single attack only has a certain probability to be successful, the probability to have a successful attack with a similar distance reduction on multiple messages is very low.

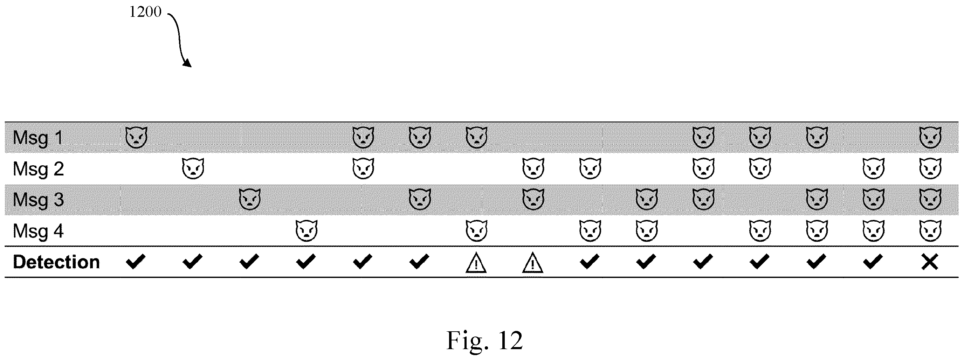

**Fig. 12** shows another table illustrating a detection performance 1200 for a generalized 4-message DS-TWR. An attacker, which is represented by the symbol 🐱, can anticipate one or more ranging messages. In the table, the check mark symbol ✓ indicates when the attack can be detected using the second algorithm and/or the third algorithm, and the cross symbol **X** indicates that the attack cannot be detected using the second algorithm and/or the third algorithm. Furthermore, the symbol ⚠ indicates that the third algorithm can detect the attack, provided that the SS-TWR results are comparable (i.e. provided that clock drift compensation is applied), as other results may be equal due to the symmetry of the attacks.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

LIST OF REFERENCE SIGNS

100      attack detection method
102      performing ranging operations between at least two UWB nodes comprised in a communication network, wherein said ranging operations output ranging results
104      performing at least one consistency check on the ranging results output by the ranging operations

| 106 | detecting at least one attack on an estimated distance between one or more of said UWB nodes using an output of the consistency check |
| 200 | attack detection system |
| 202 | UWB node |
| 204 | UWB node |
| 206 | UWB node |
| 208 | UWB node |
| 210 | attack detection unit |
| 300 | multi-responder setup |
| 302 | initiator |
| 304 | responder A |
| 306 | responder B |
| 308 | responder C |
| 400 | multi-responder setup |
| 402 | output of single-sided two-way ranging operation |
| 500 | multi-responder setup |
| 502 | output of single-sided two-way ranging operation |
| 600 | multi-responder setup |
| 602 | output of single-sided two-way ranging operation |
| 700 | multi-responder setup |
| 702 | attacker signal |
| 800 | multi-responder setup |
| 802 | moving responder |
| 804 | initiator A |
| 900 | single initiator and responder setup |
| 902 | initiator |
| 904 | responder |
| 906 | output of first single-sided two-way ranging operation |
| 908 | output of second single-sided two-way ranging operation |
| 1000 | single initiator and responder setup |
| 1002 | initiator |
| 1004 | responder |
| 1006 | output of first single-sided two-way ranging operation |
| 1008 | output of second single-sided two-way ranging operation |
| 1010 | output of first double-sided two-way ranging operation |
| 1012 | output of second double-sided two-way ranging operation |
| 1014 | output of further single-sided two-way ranging operation |
| 1016 | output of further single-sided two-way ranging operation |
| 1018 | output of further double-sided two-way ranging operation |
| 1100 | detection performance |
| 1200 | detection performance |

**Claims**

1. An attack detection method, comprising:

   performing ranging operations between at least two ultra-wideband, UWB, nodes comprised in a communication network, wherein said ranging operations output ranging results;
   performing at least one consistency check on the ranging results output by the ranging operations;
   detecting at least one attack on an estimated distance between one or more of said UWB nodes using an output of the consistency check.

2. The method of claim 1, wherein the consistency check comprises:

   performing, between UWB nodes located at a predefined, fixed distance of each other, single-sided two-way ranging operations while said UWB nodes are performing one or more further ranging operations with a mobile UWB node;
   comparing an output of the single-sided two-way ranging operations with said predefined, fixed distance;
   concluding that an inconsistency exists if the output of the single-sided two-way ranging operations does not correspond to the predefined, fixed distance.

3. The method of claim 2, further comprising concluding that an attack is carried out on an estimated distance between said UWB nodes and the mobile UWB node if said inconsistency exists, wherein the further UWB node mobile UWB node has a variable distance to each of the UWB nodes located at the predefined, fixed distance of each other.

4. The method of claim 3, wherein:

   the UWB nodes located at the predefined, fixed distance of each other act as responder nodes and the mobile UWB node acts as an initiator node; or
   one of the UWB nodes located at the predefined, fixed distance of each other acts as an initiator node, the other UWB nodes located at the predefined, fixed distance of each other act as responder nodes, and the mobile UWB node acts as a responder node.

5. The method of any one of claims 2 to 4, wherein it is concluded that the inconsistency exists after a predefined margin of tolerance has been taken into account.

6. The method of any preceding claim, wherein the consistency check comprises:

performing, by a first UWB node, a first single-sided two-way ranging operation with a second UWB node;
performing, by the second UWB node, a second single-sided two-way ranging operation with the first UWB node;
performing, by the first UWB node and the second UWB node, a double-sided two-way ranging operation;
concluding that an inconsistency exists if an output of the first single-sided two-way ranging operation does not correspond to an output of the second single-sided two-way ranging operation, the output of the first single-sided two-way ranging operation does not correspond to an output of the double-sided two-way ranging operation, and/or the output of the second single-sided two-way ranging operation does not correspond to the output of the double-sided two-way ranging operation.

7. The method of claim 6, further comprising concluding that an attack is carried out on an estimated distance between the first UWB node and the second UWB node if said inconsistency exists.

8. The method of claim 6 or 7, wherein one of the first UWB node and the second UWB node acts as an initiator node, and the other one of the first UWB node and the second UWB node acts as a responder node.

9. The method of any one of claims 6 to 8, wherein it is concluded that the inconsistency exists after a predefined margin of tolerance has been taken into account.

10. The method of any one of claims 1 to 5, wherein the consistency check comprises:

performing, by a first UWB node, at least one first single-sided two-way ranging operation with a second UWB node;
performing, by the first UWB node, at least one second single-sided two-way ranging operation with the second UWB node;
performing, by the first UWB node, a first double-sided two-way ranging operation;
performing, by the second UWB node, a second double-sided two-way ranging operation;
concluding that an inconsistency exists if an output of the first double-sided two-way ranging operation does not correspond to an output of the second double-sided two-way ranging operation, and/or an output of the first single-sided two-way ranging operation does not correspond to an output of the second single-sided two-way ranging operation.

11. The method of claim 10, further comprising concluding that an inconsistency exists if:

the output of the first double-sided two-way ranging operation does not correspond to the output of the first single-sided two-way ranging operation;
the output of the first double-sided two-way ranging operation does not correspond to the output of the second single-sided two-way ranging operation;
the output of the second double-sided two-way ranging operation does not correspond to the output of the first single-sided two-way ranging operation; and/or
the output of the second double-sided two-way ranging operation does not correspond to the output of the second single-sided two-way ranging operation.

12. The method of claim 10 or 11, wherein one of the first UWB node and the second UWB node acts as an initiator node, and the other one of the first UWB node and the second UWB node acts as a responder node.

13. The method of any one of claims 10 to 12, wherein it is concluded that the inconsistency exists after a predefined margin of tolerance has been taken into account.

14. An attack detection system, comprising:

at least two ultra-wideband, UWB, nodes comprised in a communication network, wherein said UWB nodes are configured to perform ranging operations, and wherein said ranging operations output ranging results;
an attack detection unit configured to perform at least one consistency check on the ranging results output by the ranging operations;
wherein the attack detection unit is further configured to detect at least one attack on an estimated distance between one or more of said UWB nodes using an output of the consistency check.

15. A computer program comprising executable instructions which, when executed by the attack detection system of claim 14, carry out the method of any one of claims 1 to 13.

**Amended claims in accordance with Rule 137(2) EPC.**

1. An attack detection method (100), comprising:

   performing (102) ranging operations between at least two ultra-wideband, UWB, nodes comprised in a communication network, wherein said ranging operations output ranging results;
   performing (104) at least one consistency check on the ranging results output by the ranging operations;
   detecting (106) at least one attack on an estimated distance between one or more of said UWB nodes using an output of the consistency check;
   **characterized in that** the consistency check comprises:

   performing, between UWB nodes located at a predefined, fixed distance of each other, single-sided two-way ranging operations while said UWB nodes are performing one or more further ranging operations with a mobile UWB node;
   comparing an output of the single-sided two-way ranging operations with said predefined, fixed distance;
   concluding that an inconsistency exists if the output of the single-sided two-way ranging operations does not correspond to the predefined, fixed distance.

2. The method (100) of claim 1, further comprising concluding that an attack is carried out on an estimated distance between said UWB nodes and the mobile UWB node if said inconsistency exists, wherein the further UWB node mobile UWB node has a variable distance to each of the UWB nodes located at the predefined, fixed distance of each other.

3. The method (100) of claim 2, wherein:

   the UWB nodes located at the predefined, fixed distance of each other act as responder nodes and the mobile UWB node acts as an initiator node; or
   one of the UWB nodes located at the predefined, fixed distance of each other acts as an initiator node, the other UWB nodes located at the predefined, fixed distance of each other act as responder nodes, and the mobile UWB node acts as a responder node.

4. The method (100) of any preceding claim, wherein it is concluded that the inconsistency exists after a predefined margin of tolerance has been taken into account.

5. The method (100) of any preceding claim, wherein the consistency check comprises:

   performing, by a first UWB node, a first single-sided two-way ranging operation with a second UWB node;
   performing, by the second UWB node, a second single-sided two-way ranging operation with the first UWB node;
   performing, by the first UWB node and the second UWB node, a double-sided two-way ranging operation;
   concluding that an inconsistency exists if an output of the first single-sided two-way ranging operation does not correspond to an output of the second single-sided two-way ranging operation, the output of the first single-sided two-way ranging operation does not correspond to an output of the double-sided two-way ranging operation, and/or the output of the second single-sided two-way ranging operation does not correspond to the output of the double-sided two-way ranging operation.

6. The method (100) of claim 5, further comprising concluding that an attack is carried out on an estimated distance between the first UWB node and the second UWB node if said inconsistency exists.

7. The method (100) of claim 5 or 6, wherein one of the first UWB node and the second UWB node acts as an initiator node, and the other one of the first UWB node and the second UWB node acts as a responder node.

8. The method (100) of any one of claims 5 to 7, wherein it is concluded that the inconsistency exists after a predefined margin of tolerance has been taken into account.

9. The method (100) of any one of claims 1 to 4, wherein the consistency check comprises:

   performing, by a first UWB node, at least one first single-sided two-way ranging operation with a second UWB node;
   performing, by the first UWB node, at least one second single-sided two-way ranging operation with the second UWB node;
   performing, by the first UWB node, a first double-sided two-way ranging operation;
   performing, by the second UWB node, a second double-sided two-way ranging operation;
   concluding that an inconsistency exists if an output of the first double-sided two-way ranging operation does not correspond to an output of the second double-sided two-way ranging operation, and/or an output of the first single-sided two-way ranging operation does not correspond to an output of the second single-sided two-way ranging operation.

10. The method (100) of claim 9, further comprising concluding that an inconsistency exists if:

the output of the first double-sided two-way ranging operation does not correspond to the output of the first single-sided two-way ranging operation;

the output of the first double-sided two-way ranging operation does not correspond to the output of the second single-sided two-way ranging operation;

the output of the second double-sided two-way ranging operation does not correspond to the output of the first single-sided two-way ranging operation; and/or

the output of the second double-sided two-way ranging operation does not correspond to the output of the second single-sided two-way ranging operation.

11. The method (100) of claim 9 or 10, wherein one of the first UWB node and the second UWB node acts as an initiator node, and the other one of the first UWB node and the second UWB node acts as a responder node.

12. The method (100) of any one of claims 9 to 11, wherein it is concluded that the inconsistency exists after a predefined margin of tolerance has been taken into account.

13. An attack detection system (200), comprising:

at least two ultra-wideband, UWB, nodes (202, 204, 206, 208) comprised in a communication network, wherein said UWB nodes (202, 204, 206, 208) are configured to perform ranging operations, and wherein said ranging operations output ranging results;

an attack detection unit (210) configured to perform at least one consistency check on the ranging results output by the ranging operations;

wherein the attack detection unit (210) is further configured to detect at least one attack on an estimated distance between one or more of said UWB nodes (202, 204, 206, 208) using an output of the consistency check;

**characterized in that** the consistency check comprises:

performing, between UWB nodes located at a predefined, fixed distance of each other, single-sided two-way ranging operations while said UWB nodes are performing one or more further ranging operations with a mobile UWB node;

comparing an output of the single-sided two-way ranging operations with said predefined, fixed distance;

concluding that an inconsistency exists if the output of the single-sided two-way ranging operations does not correspond to the predefined, fixed distance.

14. A computer program comprising executable instructions which, when executed by the attack detection system (200) of claim 13, carry out the method (100) of any one of claims 1 to 12.

100

**102**
Performing ranging operations between at least two UWB nodes comprised in a communication network, wherein said ranging operations output ranging results

**104**
Performing at least one consistency check on the ranging results output by the ranging operations

**106**
Detecting at least one attack on an estimated distance between one or more of said UWB nodes using an output of the consistency check

Fig. 1

EP 4 354 928 A1

200

202
UWB Node

204
UWB Node

210
Attack Detection Unit

206
UWB Node

208
UWB Node

Fig. 2

Fig. 3

$d_{AC}$

$d_{AB}$

$d_{BC}$

$300$

$t_1^{AB} = t_1^{AC}$

$t_2^{AB}$

$t_2^{AC}$

$t_4^{AB}$

$t_3^{AB} = t_1^{BC}$

$t_2^{BC}$

$t_4^{AC}$

$t_4^{BC}$

$t_3^{BC} = t_3^{AC}$

302
Initiator

304
Resp. A

306
Resp. B

308
Resp. C

Fig. 4

500

$d_{AC}$

$d_{AB}$

$d_{BC}$

502
$sstwr_{BC}$

302
Initiator

304
Resp. A

306
Resp. B

308
Resp. C

Fig. 5

Fig. 6

Fig. 7

EP 4 354 928 A1

Fig. 8

$d_{AC}$

$d_{AB}$

$d_{BC}$

$t_1^{AB} = t_1^{AC}$

$t_2^{AB}$

$t_2^{AC}$

$t_4^{AB}$

$t_3^{AB} = t_1^{BC}$

$t_2^{BC}$

$t_4^{AC}$

$t_4^{BC}$

$t_3^{BC} = t_3^{AC}$

800

802
Moving
responder

804
Initiator A

306
Resp. B

308
Resp. C

Fig. 9

Fig. 10

Fig. 11

1200

| Msg 1 | | | | | | | | | | | | | | | |
| Msg 2 | | | | | | | | | | | | | | | |
| Msg 3 | | | | | | | | | | | | | | | |
| Msg 4 | | | | | | | | | | | | | | | |
| Detection | ✔ | ✔ | ✔ | ✔ | ✔ | ✔ | ⚠ | ⚠ | ✔ | ✔ | ✔ | ✔ | ✔ | ✔ | ✖ |

Fig. 12

Europäisches Patentamt

European Patent Office

Office européen des brevets

# EUROPEAN SEARCH REPORT

Application Number

EP 22 20 1746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATRICK LEU ET AL: "Ghost Peak: Practical Distance Reduction Attacks Against HRP UWB Ranging", ARXIV.ORG, CORNELL UNIVERSITY LIBRARY, 201 OLIN LIBRARY CORNELL UNIVERSITY ITHACA, NY 14853, 9 November 2021 (2021-11-09), XP091097748, * page 1, left-hand column, line 1 - page 4, right-hand column, line 44 * * page 5, right-hand column, line 15 - page 6, right-hand column, line 6 * * page 9, right-hand column, line 10 - page 13, left-hand column, line 7; figures 1-7,10,11 * | 1-15 | INV. H04W12/122 H04W12/61 H04L9/42 G01S13/78 G01S7/00 |
| X | EP 3 321 712 A1 (NXP BV [NL]) 16 May 2018 (2018-05-16) * paragraph [0002] - paragraph [0012] * * paragraph [0036] - paragraph [0039] * * paragraph [0042] - paragraph [0043] * * paragraph [0049] - paragraph [0054]; claims 1,13; figures 1-6 * | 1-15 | |
| X | KR 2021 0007781 A (SAMSUNG ELECTRONICS CO LTD [KR]) 20 January 2021 (2021-01-20) * the whole document * | 1-15 | TECHNICAL FIELDS SEARCHED (IPC)<br>G01S<br>H04L<br>H04W |
| A | EP 4 057 029 A1 (NXP BV [NL]) 14 September 2022 (2022-09-14) * paragraph [0019] - paragraph [0023] * * paragraph [0027] - paragraph [0035] * * paragraph [0051] - paragraph [0055]; claims 1,2,5-10,13-15; figures 1,5-7 * | 1-15 | |

The present search report has been drawn up for all claims

| Place of search | Date of completion of the search | Examiner |
|---|---|---|
| The Hague | 28 March 2023 | Schwibinger, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 1746

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2023

| Patent document cited in search report | | Publication date | Patent family member(s) | | Publication date |
|---|---|---|---|---|---|
| EP 3321712 | A1 | 16-05-2018 | CN | 108075994 A | 25-05-2018 |
| | | | EP | 3321712 A1 | 16-05-2018 |
| | | | US | 2018138993 A1 | 17-05-2018 |
| KR 20210007781 | A | 20-01-2021 | NONE | | |
| EP 4057029 | A1 | 14-09-2022 | CN | 115087088 A | 20-09-2022 |
| | | | EP | 4057029 A1 | 14-09-2022 |
| | | | US | 2022295430 A1 | 15-09-2022 |

EPO FORM P0459

For more details about this annex : see Official Journal of the European Patent Office, No. 12/82